# EUROPÄISCHE PATENTSCHRIFT

(11) **EP 1 450 085 B1**
(45) Veröffentlichungstag und Bekanntmachung des Hinweises auf die Patenterteilung: **08.10.2008**
(21) Anmeldenummer: 04004093.3
(22) Anmeldetag: 23.02.2004
(51) Int. Cl.: F16K 11/07, B25B 27/00, B23P 19/08

(54) **Montagevorrichtung zur Montage von Dichtungen**
Device for mounting seals
Dispositif pour monter des joints

(30) Priorität: 24.02.2003 DE 10307971
(43) Veröffentlichungstag der Anmeldung: 25.08.2004
(73) Patentinhaber: Bosch Rexroth AG, 97816 Lohr am Main (DE)
(72) Erfinder: Longère, Jean-Paul, 01420 Seyssel (FR)
(74) Vertreter: Thürer, Andreas

(56) Entgegenhaltungen:
- DE-A- 3 909 973
- DE-U- 7 719 941
- GB-A- 190 522 818
- US-A- 4 212 096

## Beschreibung

### Technisches Gebiet

Die Erfindung betrifft eine Montagevorrichtung zum radialen Einführen eines flexiblen Zwischenelements in einen Zwischenraum eines Bauteils. Insbesondere betrifft die Erfindung eine Montagevorrichtung zum radialen Einführen einer flexiblen Dichtung in einen Zwischenraum eines Pneumatikverteilers, insbesondere eines Pneumatikventils.

### Stand der Technik

Mehrwege-Pneumatikventile und andere Schaltventile sind im Stand der Technik in vielfältigen Ausführungen und für verschiedene Anwendungszwecke bekannt. Üblicherweise umfassen handelsübliche Mehrwege-Pneumatikventile einen Grundblock, in dem zumindest eine Kammer untergebracht ist, die üblicherweise in mehrere Zwischenkammern unterteilbar ist. Ferner ist eine Schaltmimik angeordnet, die ein selektives Schalten in der Weise ermöglicht, dass zumindest eine Zwischenkammer je nach Schaltstellung selektiv mit keinem, einem oder mehreren Ein- und Ausgängen kommuniziert. In einer Durchgangsschaltstellung kann ein Fluid somit von einem Eingang über eine Zwischenkammer zu einem Ausgang gelangen. Wird die Schaltstellung selektiv verändert, so gelangt entweder ein Fluid von einem anderen Eingang zu diesem Ausgang, oder das Fluid von dem ersten Eingang gelangt zu einem anderen Ausgang oder die Kommunikation zwischen dem Eingang und dem Ausgang wird unterbrochen. Auch die weiteren Zwischenkammern können unabhängig oder gekoppelt an die Schaltstellung der ersten Zwischenkammer selektiv geschaltet werden.
Um verschiedene Schaltstellungen zu ermöglichen, kann beispielsweise in einer zylindrischen Kammer ein verschiebbarer Kolben angeordnet sein, dessen Durchmesser in definierten Abständen zueinander jeweils aufgedickt ist, wobei die Zwischenräume zwischen den Aufdickungen als Zwischenkammern ausgebildet sind. Wird der Kolben nun axial verschoben, so verändert sich die axiale Position der Zwischenräume in der zylindrischen Kammer. In einer einfach herzustellenden Ausführung sind die Ein- und Ausgänge jeweils, lediglich als radial in die zylinderförmige Kammer einmündende Bohrungen ausgeführt. Je nach axialer Verschiebeposition des Kolbens können die Ein- und Ausgänge somit selektiv mit den Zwischenkammern verbunden werden.

Ein wesentliches Problem bei der Konstruktion und dem Betrieb solcher Mehrwege-Pneumatikventile stellt die fluiddichte Abdichtung der Zwischenkammern gegeneinander sowie auch nach außen dar. Insbesondere bei Mehrwegeventilen, deren Grundblock sich aus mehreren Einzelelementen zusammensetzt, müssen die Bauteilfugen zwischen aneinandergrenzenden Einzelelementen abgedichtet werden, um eine Leckage von Fluid durch diese Bauteilfugen hindurch zu verhindern.

So ist beispielsweise von der Anmelderin unter der Bezeichnung ,TC' eine Ventilbaugruppe auf dem Markt, bei der die Ventile jeweils einen Grundblock umfassen, der zur Vereinfachung der Fertigung aus einer Vielzahl von Einzelelementen zusammengesetzt wird. Der quaderförmige Grundkörper eines solchen Grundblocks weist auf einer Längsseite eine rechteckförmige Aussparung auf, die sich nahezu über die gesamte Länge des Grundkörpers erstreckt und in der Tiefe zu ca. zwei Dritteln der Höhe des Grundblocks in den Grundblock eingearbeitet ist. Am Boden der Aussparung sind Zwischenwände angeordnet, die die Aussparung in fünf Zwischenbereiche unterteilen. In den ersten, dritten und fünften Zwischenbereich münden im fertig montierten Zustand des Ventils Bohrungen von der Unterseite des Grundblocks her ein, in den zweiten und vierten Zwischenbereich Bohrungen von der Oberseite des Grundblocks. Um in Längsrichtung des Grundblocks einen zylindrischen Kanal auszuformen, in den dann der Ventilkolben eingesetzt wird, ist in dem Grundblock eine Durchgangsbohrung vorgesehen, die sich von einer Stirnseite des Grundblocks zur anderen Stirnseite und jeweils auch durch die Zwischenwände erstreckt. Bei der Montage des Ventils wird in jeden Zwischenbereich ein Käfig eingesetzt. Die Außenkonturen der Käfige sind hierzu jeweils passend zu den Innenkonturen der Zwischenbereiche der Aussparung ausgeführt. Ferner sind auch in den Käfigen jeweils zylindrische Durchgangsbohrungen vorgesehen, so dass sich nach dem Einsetzen der Käfige ein geschlossener, vollzylindrischer Kanal zur Aufnahme des Ventilkolbens ergibt. Die Käfige werden zur Oberseite der Aussparung hin mittels eines mit dem Grundblock verschraubbaren Deckels gegen ein Herausfallen gesichert. Als letzter Montageschritt wird nach dem Zusammenbau des Grundblocks der Ventilkolben zusammen mit einer Rückstellfeder in die Durchgangsbohrung eingesetzt und die Durchgangsbohrung an der unteren Stirnseite über ein einfaches Deckelelement und an der oberen Stirnseite über ein Magnetspulenabschlusselement verschlossen.

Um eine Leckage von Fluid aus dem zylindrischen Kanal über die Bauteilfugen zu vermeiden, sind in den Trennfugen zwischen den Zwischenwänden und den Käfigen jeweils Dichtungen angeordnet, vorzugsweise Rundschnurdichtungen. Teilweise sind hierzu in den Bauteilen kleine Positionsnuten angebracht, um die Dichtungen zumindest teilweise aufzunehmen. Diese Dichtungen wurden bisher vor dem Einsetzen der Käfige von Monteuren manuell eingesetzt. Die Dichtungen wurden hierzu in Ventilkolbenachsrichtung, d.h. axial in ihre Endposition eingeführt.
Eine solche manuelle Montage der Dichtungen ist jedoch zeitaufwendig und personalintensiv. Außerdem müssen die Dichtungen sehr sorgfältig an den jeweils dafür vorgesehenen Positionen platziert werden, damit sie beim späteren Einsetzen der Käfige nicht aus ihrer Position herausgeschoben werden und so entweder die Funktionalität des Ventils beeinträchtigen oder selbst sogar beschädigt werden. Im Rahmen der manuellen Montage kommt es hier immer wieder zu fehlerhaft eingesetzten oder fehlerhaft ausgerichteten Dichtungen, die es dann erforderlich machen, das Ventil in einem Reparaturschritt erneut zu zerlegen und die Dichtung zu erneuern oder erneut auszurichten.
Um die Montage der Dichtungen maschinell durchführen zu können, war bisher eine komplizierte Montagevorrichtung erforderlich, mittels derer die Dichtung zur Montage in mehrere Bewegungsrichtungen, nämlich zumindest zunächst radial und anschließend axial, verfahren werden konnte.

Aus der DE 77 19 941 U ist eine Vorrichtung zum Einsetzen eines elastischen Rings in eine Umfangsnut einer Bohrung bekannt. Mittels dieser Vorrichtung kann der elastische Ring zunächst radial und anschließend axial in eine Endposition eingesetzt werden. Die US 4,212,096 beschreibt eine Vorrichtung zum automatischen Einsetzen eines elastischen Rings auf eine Außennut. Die DE 39 09 973 A1 offenbart eine O-Ring- Positioniervorrichtung, wobei ein O-Ring durch ein Positionierrohr entlang einer Schiene in eine Endposition geschoben wird.

### Darstellung der Erfindung

Der Erfindung liegt somit die Aufgabe zugrunde, eine Montagevorrichtung zur Verfügung zu stellen, mit der eine Dichtung unter Vermeidung der im Stand der Technik bekannten Probleme in einen Zwischenraum eines Bauteils, insbesondere in einen Zwischenraum, der sich zwischen einer Zwischenwand und einem Käfig ergibt, eingeführt werden kann. Insbesondere soll die Montagevorrichtung einfach aufgebaut und zweckmäßig auch vollautomatisch oder zumindest teilautomatisch betreibbar sein.
Des weiteren ist es eine Aufgabe der Erfindung, ein Verfahren zur Montage eines flexiblen Zwischenelements in einen Zwischenraum eines Bauteils, vorzugsweise zur vollautomatisch ablaufenden Montage, zur Verfügung zu stellen.

Diese Aufgaben werden erfindungsgemäß durch die Montagevorrichtung gemäß Anspruch 1 sowie durch das Verfahren gemäß Anspruch 12 gelöst. Weitere vorteilhafte Ausgestaltungen der Erfindung finden sich in den Unteransprüchen.

Die erfindungsgemäße Montagevorrichtung zum radialen Einführen eines flexiblen Zwischenelements in einen Zwischenraum eines Bauteils, insbesondere zum radialen Einführen einer flexiblen Dichtung in einen Zwischenraum eines Pneumatikverteilers, umfasst eine Gleitschiene, die mit einem vorderen Teil durch eine in dem Bauteil vorgesehene Öffnung bis in den Bereich des Zwischenraums des Bauteils einsetzbar ist Die Gleitschiene wiederum umfasst eine Gleitbahn, längs derer das flexible Zwischenelement bei in das Bauteil eingesetzter Gleitschiene unter Nutzung der Flexibilität des Zwischenelements in radialer Richtung gleitend in den Zwischenraum des Bauteils einführbar ist.
Gemäß der Erfindung erfolgt das Einführen des flexiblen Zwischenelements in den Zwischenraum des Bauteils somit in zwei Schritten: Zuerst wird die Gleitschiene in die Öffnung des Bauteils eingeführt. Anschließend wird das flexible Zwischenelement längs der Gleitbahn der Gleitschiene in das Bauteil eingeführt. Die Gleitbahn dient hierbei einerseits der Führung des flexiblen Zwischenelements, so dass das Zwischenelement an den beabsichtigten Platz in dem Bauteil gelangt. Ferner ist die Gleitbahn vorteilhaft mit einer glatten Oberfläche ausgerührt, so dass das Einführen des flexiblen Zwischenelements mit möglichst geringer Reibung und insbesondere ohne Beschädigung des flexiblen Zwischenelements erfolgt
Mittels der erfindungsgemäßen Montagevorrichtung lässt sich das flexible Zwischenelement radial in einen in einem Bauteil vorgesehenen Zwischenraum einführen. Die Richtung des Einführvorgangs ist hierbei rein radial, d.h. das flexible Zwischenelement wird nur längs der Gleitschiene und in Richtung dieser zugeführt. Bisher erfolgte die Zuführung des flexiblen Zwischenelements axial oder zunächst radial und abschließend axial.

Im Rahmen der vorliegenden Erfindungsbeschreibung wird mit Zwischenraum insbesondere eine Bauteilfuge zwischen zwei Bauteilen bezeichnet. Es kann jedoch auch eine größere Aussparung zur Aufnahme des flexiblen Zwischenelements vorgesehen sein, die dann ebenso von dem Begriff Zwischenraum umfasst ist. Der Zwischenraum muss nicht bereits bei der Montage des flexiblen Zwischenelements als Zwischenraum erkennbar sein, sondern kann auch erst nach erfolgter Gesamtmontage als Zwischenraum zwischen zwei Bauteilen vorliegen. Beispielsweise ergibt sich der Zwischenraum zwischen einer Zwischenwand und einem Käfig erst nach dem Einsetzen des Käfigs.
Insbesondere ist es mittels der erfindungsgemäßen Montagevorrichtung möglich, eine flexible Dichtung in eine längsseitige Aussparung eines Grundblocks eines Pneumatikverteilers einzuführen und hier gezielt an einer vorgesehenen Position, beispielsweise angrenzend an eine Zwischenwand oder auch an eine Seitenwand der Aussparung, anzuordnen. Somit muss im Rahmen der Montage eines im Stand der Technik bekannten Ventils der Ventilbaugruppe TC der Montageschritt des Einführens der Dichtungen nicht mehr manuell durchgeführt werden, sondern kann mittels der erfindungsgemäßen Montagevorrichtung erfolgen. Ein wesentlicher Vorteil einer maschinellen Montage besteht in der geringeren Fehleranfälligkeit des maschinellen Montageablaufs. Somit werden bei weniger Ventilen Dichtungen fehlerhaft eingebaut oder fehlerhaft justiert, die dann in einem Reparaturschritt zu ersetzen oder neu zu justieren wären.

Zumeist weist das Bauteil an der Position, an der das flexible Zwischenelement angeordnet werden soll, eine Vertiefung, beispielsweise eine Nut auf, in der das flexible Zwischenelement zumindest teilweise aufgenommen wird. Ist das flexible Zwischenelement eine runde oder ovale Dichtung, so ist die Vertiefung zweckmäßig als Bauteilnut mit einem runden oder ovalen Verlauf ausgeführt. Die Dichtung wird somit zu einem Teil in der Bauteilnut aufgenommen und ragt mit dem anderen Teil aus der Nut heraus.

Zweckmäßig ist die Gleitschiene in ihrem vorderen Teil zungenförmig ausgebildet, d.h. die Gleitschiene schließt in ihrem vorderen Teil mit einer halbovalen, halbrunden oder ähnlich ausgebildeten Spitze ab. Dies erleichtert einerseits das Einführen der Gleitschiene in das Bauteil, da es nicht zu einem Verkanten der Gleitschiene mit Kanten des Bauteils kommen kann. Ferner erfährt das flexible Zwischenelement beim Einführen in der Mitte der Gleitschiene, d.h. im Bereich der Zungenspitze eine tiefer in das Bauteil hineinreichende Führung als an den Rändern. Insbesondere wenn es sich bei dem einzuführenden flexiblen Zwischenelement um eine Dichtung mit einem runden oder ovalen Querschnitt handelt, beispielsweise eine Rundschnurdichtung, ist die Spitze der Gleitschiene vorteilhaft entsprechend der Außenkontur der Dichtung ausgebildet.

In einer bevorzugten Ausführung der Erfindung ist die Gleitbahn als Vertiefung in der Gleitschiene ausgebildet. Zur seitlichen Begrenzung der Gleitbahn ist zweckmäßig ein erster seitlicher Begrenzungssteg sowie ein dem ersten seitlichen Begrenzungssteg gegenüberliegender, zweiter seitlicher Begrenzungssteg an der Gleitschiene angeordnet. Besonders bevorzugt ist zusätzlich ein dritter, vorderer Begrenzungssteg an der Gleitschiene angeordnet, um den Gleitweg des flexiblen Zwischenelements in Einführrichtung nach vorne zu begrenzen.
Vertiefung sowie Begrenzungsstege sorgen für eine Begrenzung der Gleitbahn sowohl zur Seite als auch zweckmäßig in Einführrichtung nach vorne. Die Gleitbahn ist somit definiert vorgegeben, wodurch eine gute Führung des flexiblen Zwischenelements beim Einführen sichergestellt ist. Einzig auf der Oberseite findet während des Einführens ein Kontakt zwischen dem flexiblen Zwischenelement und dem Bauteil statt. Beschädigungen des flexiblen Zwischenelements beispielsweise durch überstehende Bauteilkanten, oder ein fehlerhaftes Ausrichten des flexiblen Zwischenelements, beispielsweise durch ein zu tiefes Einführen des Zwischenelements in das Bauteil, werden durch die Anordnung der Begrenzungsstege sowie durch die Ausbildung der Gleitbahn als Vertiefung vermieden.

Die Gleitbahn ist auf einer ersten Seite der Gleitschiene angeordnet. Auf einer zweiten, der ersten Seite entgegengesetzten Seite der Gleitschiene kann in einer vorteilhaften Ausgestaltung der Erfindung ferner eine zweite Gleitbahn angeordnet sein. Hiermit lassen sich beispielsweise zwei Dichtungen gleichzeitig parallel zueinander einführen.

Die erfindungsgemäße Montagevorrichtung umfasst ferner einen Grundblock mit einer Durchgangsöffnung. Die Gleitschiene greift mit einem hinteren Teil, der dem vorderen Teil abgewandt ist, durch die Durchgangsöffnung hindurch und ist hier mit dem Grundblock verbunden. Zwischen Gleitschiene und Grundblock verbleibt ein Zwischenspalt, durch den das flexible Zwischenelement durch den Grundblock gleiten kann. Des weiteren ist an dem Grundblock zweckmäßig zumindest ein Zentrierelement zur Zentrierung des Grundblocks an dem Bauteil vorgesehen. Die Bauteiltiefe des Grundblocks der Montagevorrichtung ist vorteilhaft so gewählt, dass der Grundblock auf seiner vorderen, der Gleitschienenspitze zugewandten Seite im Montagezustand, d.h. in dem mit dem Bauteil zur Montage der Dichtung zusammengesetzten Zustand im Bereich der Gleitschiene unmittelbar an das Bauteil angrenzt.

Im Rahmen der Dichtungsmontage der Ventile der Baugruppe TC erstreckt sich der Grundblock somit zweckmäßig bis zu der Oberseite der jeweiligen Zwischenwand. Somit ist im Montagezustand ein geschlossener Gleitkanal ausgebildet, durch den das flexible Zwischenelement gleitet.

Zusätzlich umfasst die Montagevorrichtung ferner zweckmäßig einen Schiebestift, der längs der Gleitbahn führbar ist, um das flexible Zwischenelement in den Zwischenraum des Bauteils einzuschieben. Die Spitze des Schiebestiftes muss hierzu jedenfalls kleiner sein als die Abmessungen des Gleitkanals, um in diesen eingesteckt werden zu können. Ferner muss die Spitze lang genug sein, um das flexible Zwischenelement bis in seine Endposition vorschieben zu können.

In einer bevorzugten Ausführung der. Erfindung umfasst die Montagevorrichtung eine Mehrzahl von Gleitschienen mit einer Mehrzahl von Gleitbahnen zum gleichzeitigen Einsetzen von mehreren flexiblen Zwischenelementen in einen Zwischenraum oder mehrere Zwischenräume eines Bauteils.

Besonders zweckmäßig umfasst die Montagevorrichtung ferner eine vollautomatische Steuerung zur vollautomatischen Montage von Dichtungen in Zwischenräume von Pneumatikverteilern. Es kann aber auch insbesondere im Rahmen einer Kleinserienfertigung unter Kostengesichtspunkten zweckmäßig sein, nur eine teilautomatische Steuerung vorzusehen.

In einem weiteren Aspekt der Erfindung wird ein Verfahren zur Montage eines flexiblen Zwischenelements in einen Zwischenraum eines Bauteils, insbesondere zur Montage einer flexiblen Dichtung in einen Kammerzwischenraum oder mehrere Kammerzwischenräume eines Pneumatikverteilers, zur Verfügung gestellt. In einem ersten Schritt des Verfahrens wird die Gleitschiene der erfindungsgemäßen Montagevorrichtung mit ihrem vorderen Teil durch eine in dem Bauteil vorgesehene Öffnung bis in den Bereich des Zwischenraums des Bauteils eingesetzt. Anschließend wird das Zwischenelement unter Nutzung der Flexibilität des Zwischenelements längs der Gleitschiene gleitend radial in den Zwischenraum eingeführt, um sich hier in ihren Ausgangszustand zurückzuverformen. Die flexible Dichtung wird somit unter Nutzung der Materialflexibilität rein radial dem Zwischenraum zugeführt.

Zweckmäßig wird nach dem Einführen des Zwischenelements in den Zwischenraum die Montagevorrichtung aus der Öffnung des Bauteils wieder entfernt und die Öffnung in dem Bauteil mittels eines Käfigs verschlossen.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: einen Längsschnitt durch ein im Stand der Technik bekanntes Mehrwegeventil der Baureihe TC;
- Figur 2: Käfige sowie Dichtungselemente zum Einbau im Rahmen der Montage in das Mehrwegeventil aus Figur 1;
- Figur 3a: eine Draufsicht auf ein Versuchsmuster der erfindungsgemäßen Montagevorrichtung;
- Figur 3b: eine Seitenansicht auf das Versuchsmuster aus Figur 3a;
- Figur 4: den Vorgang der Montage einer Dichtung unter Verwendung des Versuchsmusters aus Figur 3a;
- Figur 5: eine erfindungsgemäße Montagevorrichtung zur Serienmontage von Mehrwegeventilen in der Draufsicht;
- Figur 6: die Montagevorrichtung aus Figur 5 mit einem zur Montage in der Montagevorrichtung angeordneten Grundblock eines Pneumatikverteilers;
- Figur 7: einen Grundblock eines Pneumatikverteilers, in den mittels der erfindungsgemäßen Montagevorrichtung Dichtungen eingebracht wurden.

In den Figuren sind nur die für das Verständnis der Erfindung wesentlichen Elemente und Bauteile dargestellt.
Gleiche oder gleichwirkende Bauteile sind im wesentlichen mit denselben Bezugszeichen gekennzeichnet.

### Wege zur Ausführung der Erfindung

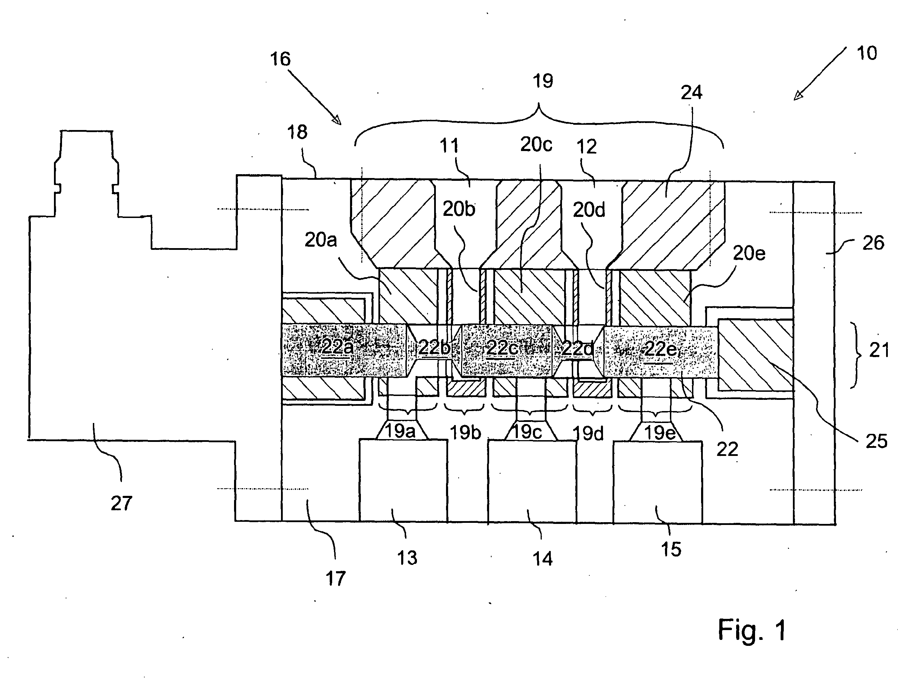

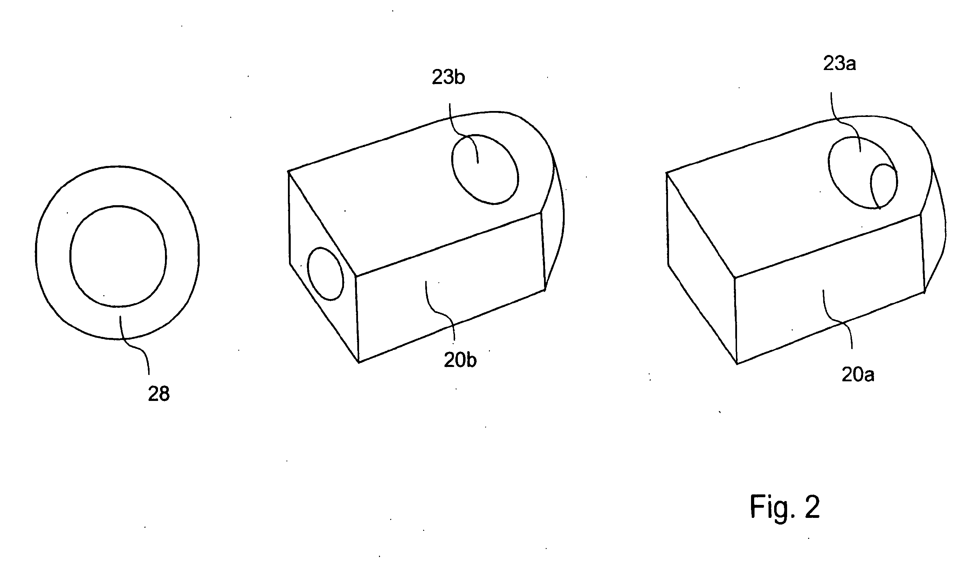

In Figur 1 ist ein Längsschnitt durch ein im Stand der Technik bekanntes, von der Anmelderin hergestelltes und vertriebenes Mehrwegeventil der Baureihe TC dargestellt. Bei dem hier dargestellten Ventil 10 handelt es sich um ein 5/2-Wege-Ventil mit 2 Eingängen 11, 12 und drei Ausgängen 13, 14 und 15. Je nach Schaltstellung des Ventils kommuniziert ein Eingang mit einem der Ausgänge, so dass ein Fluid, beispielsweise Luft, von diesem einen Eingang zu diesem einen Ausgang strömen kann.
Das Ventil umfasst einen als Pneumatikverteiler ausgebildeten Grundblock 16. Der Grundblock 16 ist zur Vereinfachung der Fertigung aus einer Vielzahl von Einzelelementen zusammengesetzt. Hierzu ist an einem quaderförmigen Grundkörper 17 des Grundblocks 16 auf der in Figur 1 oberen einer Längsseite 18 des Grundkörpers 17 eine im Querschnitt rechteckförmige Aussparung 19 angebracht, die sich nahezu über die gesamte Länge des Grundkörpers und in der Tiefe zu ca. zwei Dritteln der Höhe des Grundkörpers 17 in den Grundblock erstreckt. In diese Aussparung sind vorzugsweise würfel- oder quaderförmige, hohle und nach oben offene Einsatzelemente eingesetzt, die den unteren Bereich der Aussparung in fünf Zwischenbereiche 19a bis 19e unterteilen, die jeweils durch die als Zwischenwände fungierenden Seitenwände der Einsatzelemente voneinander abgetrennt sind. Die Zwischenwände können aber auch einteilig mit dem Grundkörper oder als einfache Steckelemente zum Einstecken in Nuten oder auch anderweitig hergestellt sein. In den ersten, dritten und fünften Zwischenbereich 19a, 19c, 19e mündet jeweils eine Bohrung von der Unterseite des Grundkörpers ein. Die Bohrungen bilden. die Ausgänge 13, 14 und 15 des Ventils. Ferner ist in jeden Zwischenbereich 19a bis 19e von oben ein Käfig 20a bis 20e eingesetzt. Die Käfige 20a und 20b sind in Figur 2 in perspektivischer Einzelteildarstellung dargestellt.
In Längsrichtung des Grundblocks ist des weiteren ein zylindrischer Kanal 21 ausgebildet, in den der Ventilkolben 22 eingesetzt ist. Um den zylindrischen Kanal 21 bereitzustellen, ist in dem Grundblock eine Durchgangsbohrung vorgesehen, die sich von der einen Stirnseite des Grundblocks zu der anderen Stirnseite und auch jeweils durch die Zwischenwände erstreckt.

Wie auch in Figur 2 zu erkennen ist, sind auch in den Käfigen 20a bis 20e hierzu jeweils zylindrische Durchgangsbohrungen 23a, 23b vorgesehen. Ferner sind in den Käfigen 20a, 20c, 20e, die in den ersten, dritten und fünften Zwischenbereich 19a, 19c, 19e eingesetzt sind, jeweils auf den Unterseiten Öffnungen vorgesehen, so dass der zylinderförmige Kanal hier jeweils mit den Ausgängen verbunden ist. In die Käfige 20b, 20d, die in den zweiten und vierten Zwischenbereich 19b, 19d eingesetzt sind, ist jeweils von oben eine Bohrung eingebracht, die in die jeweilige Durchgangsbohrung des Käfigs einmündet. Diese Bohrungen bilden die Eingänge 11 und 12 des Ventils 10.
Die Käfige werden zur Oberseite 18 hin mittels eines mit dem Grundblock verschraubbaren Deckels 24 gegen Herausfallen gesichert.
In den zylinderförmigen Kanal 21 ist der Ventilkolben 22 zusammen mit einer Rückstellfeder 25 eingesetzt und der Kanal 21 an einer Stirnseite über ein einfaches Deckelelement 26 und an der anderen Stirnseite über ein Magnetspulenabschlusselement 27 verschlossen. Das Magnetspulenabschlusselement 27 umfasst eine in Figur 1 nicht dargestellte Magnetspule, die bei Bestromung dazu führt, dass ein Stift in Richtung der Ventilkolbenachse verfahren wird und der Ventilkolben 22 hierdurch entgegen der Wirkrichtung der Rückstellfeder 25 in der Darstellung nach rechts verfahren wird. Der Ventilkolben 22 besteht aus drei aufgedickten Abschnitten 22a, 22c, 22e sowie zwei dünneren Zwischenverbindungsstegen 22b, 22d, wobei der Durchmesser der aufgedickten Abschnitte jeweils gleich dem Durchmesser des Kanals 21 ist. Die Bereiche der Zwischenverbindungsstege 22b und 22d bilden somit jeweils Zwischenkammern aus. Bei Verschiebung des Ventilkolbens wandern diese Zwischenkammern entsprechend der Bewegung des Ventilkolbens in Ventilkolbenachsrichtung. Je nach Position der Zwischenkammern kann ein Eingang 11 oder 12 des Ventils über eine der Zwischenkammern mit einem Ausgang 13, 14 oder 15 des Ventils verbunden sein, so dass ein Fluid von dem jeweiligen Eingang zu dem jeweiligen Ausgang strömen kann.

Zwischen den Käfigen 20a bis 20e und den angrenzenden Seiten- und Zwischenwänden verbleiben im montierten Zustand des Ventils Bauteilspalten, durch die ein Fluid, das einen Überdruck aufweist, aus der Zwischenkammer entweichen könnte. Um eine solche Leckage durch die Bauteilspalte zu verhindern, ist hier jeweils zwischen einem Käfig und einer Seitenoder Zwischenwand eine Rundschnurdichtung vorgesehen, die im Rahmen der Montage des Ventils vor dem Einsetzen der Käfige platziert wird.

Im montierten Zustand sind diese Dichtungen zwischen den Bauteilen zusammengepresst und dichten die Bauteilfuge ab. In Figur 1 sind die Dichtungen nicht zu erkennen. Bisher erfolgte die Montage der Dichtungen manuell oder auch maschinell, wobei die Dichtungen in einem letzten Montagebewegungsschritt in Kolbenachsrichtung, somit axial, ihrem vorbestimmten Platz zugeführt wurden. Eine solche Dichtung ist in Figur 2 dargestellt und mit Bezugszeichen 28 gekennzeichnet. Die Dichtungen sind aus einem flexiblen Material gefertigt, beispielsweise einem Gummiwerkstoff und/oder Silikonwerkstoff, so dass sie sich um ein gewisses Maß verformen lassen und hierbei eine Rückstellkraft entwickeln, die zur Abdichtung der Bauteilspalte genutzt wird.

Um einerseits den Bewegungsablauf der Montage zu vereinfachen und somit eine Möglichkeit zu schaffen, die Montage der Dichtungen mittels einer einfachen Montagevorrichtung zweckmäßig voll- oder auch teilautomatisierf vorzunehmen, schlägt die Erfindung vor, die Dichtungen rein radial zuzuführen. Die Angabe 'radial' bezieht sich hierbei auf die Kanalachse des Kanals 21 bzw. die Ventilkolbenachse des Kanalkolbens 22. Ferner schlägt die Erfindung eine einfache Montagevorrichtung vor, mittels derer die Dichtungen rein radial ihrer Position zugeführt werden können.

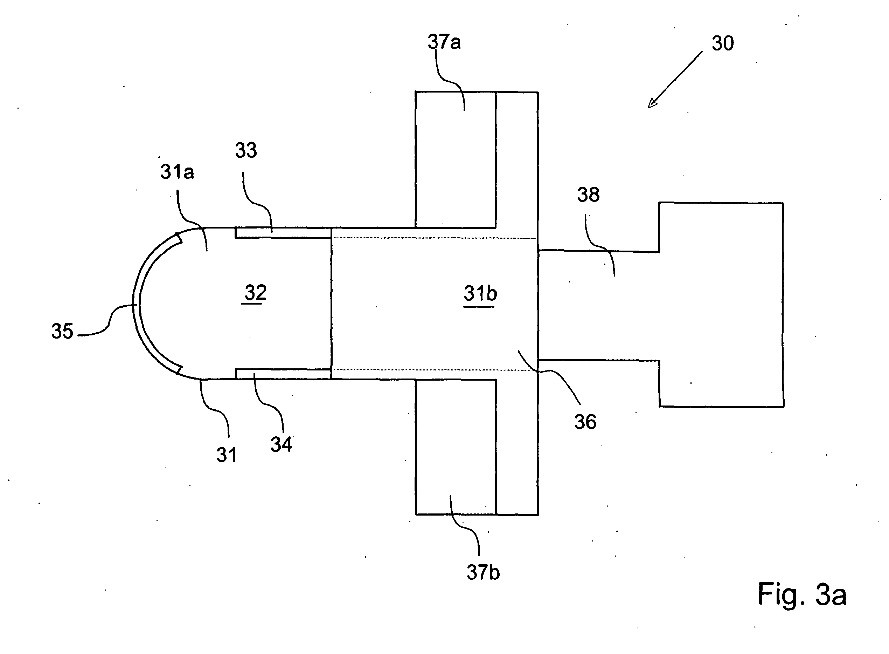

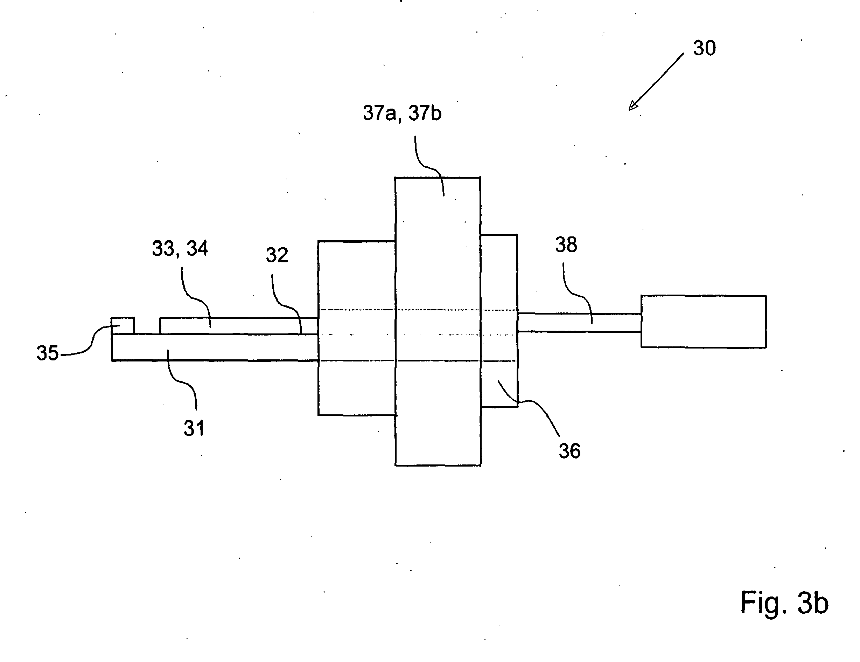

Figur 3a zeigt in einer Draufsicht und Figur 3b in einer Seitenansicht ein Versuchsmuster 30 der erfindungsgemäßen Montagevorrichtung. Das Versuchsmuster wurde erstellt, um experimentell nachzuweisen, dass die Montage der Dichtungen in der erfindungsgemäßen Weise durchführbar ist. Das Versuchsmuster umfasst hierzu die für die Erfindung funktional wesentlichen Elemente, die jedoch im Rahmen einer Weiterentwicklung zu einer serienreifen Montagevorrichtung teilweise abgeändert oder durch weitere Elemente ergänzt werden können.
Das erfindungsgemäß ausgeführte Versuchsmuster 30 umfasst eine Gleitbahn 32, die auf einer Gleitschiene 31 vorgesehen ist und auf der eine Dichtung gleiten kann. Die Gleitschiene 31 ist in ihrem vorderen Teil 31a zungenförmig mit einer wie hier dargestellten halbrunden Außenkontur ausgebildet. Die Gleitbahn 32 ist hier als Vertiefung in der Gleitschiene 31 ausgeführt. Zur seitlichen Begrenzung der Gleitbahn 32 sind ein erster seitlicher Begrenzungssteg 33 sowie ein dem ersten seitlichen Begrenzungssteg gegenüberliegender zweiter seitlicher Begrenzungssteg 34 an der Gleitschiene 31 angeordnet.

Ferner ist zusätzlich ein dritter, vorderer Begrenzungssteg 35 an der Gleitschiene 31 angeordnet, um den Gleitweg des flexiblen Zwischenelements in Einführrichtung zu begrenzen.
Ferner umfasst das erfindungsgemäß ausgeführte Versuchsmuster einen Grundblock 36 mit einer Durchgangsöffnung, wobei die Gleitschiene 31 mit einem hinteren Teil 31b der Gleitschiene 31, der dem vorderen Teil 31a abgewandt ist, durch die Durchgangsöffnung hindurchgreifend so angeordnet und mit dem Grundblock 36 verbunden ist, dass zwischen Gleitschiene und Grundblock ein Zwischenspalt verbleibt, durch den die Dichtung durch den Grundblock gleiten kann. Der Zwischenspalt ist in den Figuren 3a und 3b nicht einsehbar; jedoch ist der Verlauf der Gleitschiene in dem Grundblock gestrichelt dargestellt. An dem Grundblock sind oben und unten Zentrierbalken 37a, 37b angebracht, die einer Zentrierung des Grundblocks 36 an dem Grundkörper des Pneumatikverteilers dienen.
Des weiteren umfasst die Montagevorrichtung einen Schiebestift 38, der längs der Gleitbahn 32 führbar ist, um das flexible Zwischenelement in Richtung des vorderen Teils 31a der Gleitbahn 31 und somit in den Zwischenraum des Pneumatikverteilers einzuschieben.

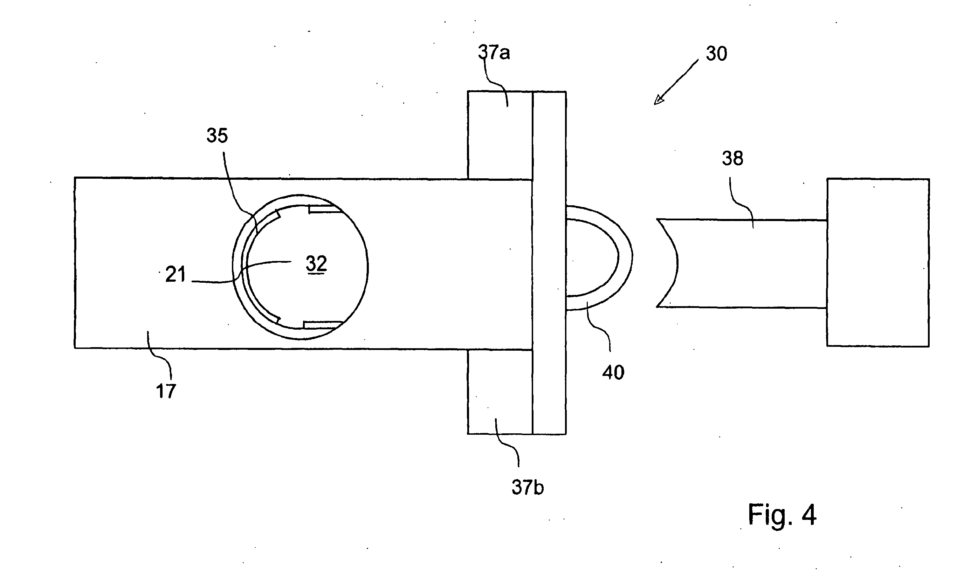

In Figur 4 ist der Vorgang der Montage einer Dichtung mit Hilfe des Versuchsmusters 30 aus den Figuren 3a und 3b in Draufsicht dargestellt. In Figur 4 zu erkennen, ist ein Grundkörper 17 eines Pneumatikverteilers mit einem hierin angeordneten zylindrischen Kanal 21. In dieser Perspektive nicht zu erkennen, ist die an der rechten Stirnseite des Pneumatikverteilers vorgesehene Öffnung, in die die Gleitschiene eingesetzt ist. Die Gleitschiene ragt bis in den Bereich des Zwischenraums des Bauteils, also in der hier dargestellten Anordnung bis in den zylindrischen Kanal 21. Zwischen Gleitschiene und Bauteilwand verbleibt längs des gesamten Gleitwegs ein Spalt, längs dessen eine flexible Dichtung gleiten kann. Zum Einsetzen der Dichtung in den Spalt und zum Gleiten der Dichtung längs des Gleitwegs ist es erforderlich, dass sich die Dichtung verformen lässt. Erst wenn die Dichtung in ihrer Endposition angekommen ist, kommt es zumindest teilweise zu einer Rückverformung der Dichtung. Mit Hilfe des Versuchsmusters lassen sich so insbesondere runde oder ovale Dichtungen in ein Bauteil einbringen. Nach dem Einsetzen der einzuführenden, flexiblen Dichtung 40 in die Gleitschiene, wie in Figur 4 dargestellt, wird die Dichtung hierzu mittels des Schiebestiftes 38 längs des Gleitwegs in Richtung des Kanals 21 geschoben.

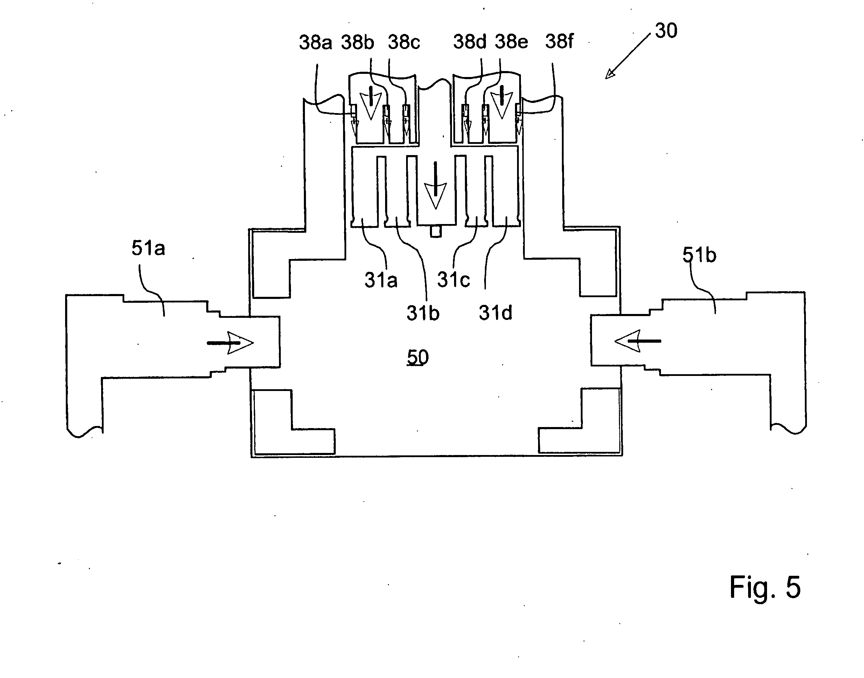

Figur 5 zeigt eine weitere erfindungsgemäß ausgeführte Montagevorrichtung 30, die zur Serienmontage von Mehrwegeventilen geeignet ist. Dargestellt sind hier nur die wesentlichen Bauelemente. Die Funktionsweise der hier dargestellten Montagevorrichtung entspricht den Ausführungen zu dem Versuchsmuster gemäß den Figuren 3 und 4. Jedoch sind in der hier dargestellten Montagevorrichtung mehrere Gleitschienen 31a bis 31d sowie mehrere Schiebestifte 38a bis 38f nebeneinander angeordnet, um ein gleichzeitiges Einführen mehrerer Dichtungen in benachbarte Zwischenräume eines oder mehrerer Bauteile vornehmen zu können. Insgesamt können hiermit sechs Dichtungen gleichzeitig montiert werden. Während für jede einzusetzende Dichtung ein separater Schiebestift 38a bis 38f vorgesehen ist, sind die Gleitbahnen der in der Darstellung von links zu zählenden zweiten und dritten sowie der vierten und fünften zu montierenden Dichtung jeweils auf den Vorder- und Rückseiten der Gleitschienen 31b sowie 31c ausgebildet. Die Gleitschienen sind an ihren hinteren Enden mit einem Bewegungsmechanismus verbunden, mit dem die Gleitschienen zur Positionierung nach vorne in eine Öffnung eines Bauteils verfahren werden können. Der Bewegungsmechanismus wird hierzu von Stellmotoren angetrieben, die von einer zentralen Steuereinheit gesteuert werden. Auch die Schiebestifte 38a bis 38f werden hier von der zentralen Steuereinheit gesteuert und sind mittels eines Bewegungsmechanismus nach vorne verschiebbar. Die für die Verstellung erforderlichen Bewegungsmechanismen sind in Figur 5 nicht dargestellt. Neben den beschriebenen Elementen umfasst die Montagevorrichtung zusätzlich eine Bodenplatte 50, auf der der Grundkörper eines zu montierenden Ventils angeordnet werden kann, sowie Halteelemente 51a, 51b zur Fixierung des Grundkörpers 17. Die in der Figur angegebenen Pfeile geben jeweils die Bewegungsrichtungen der Halteelemente, der Gleitschienen sowie der Schiebestifte an.

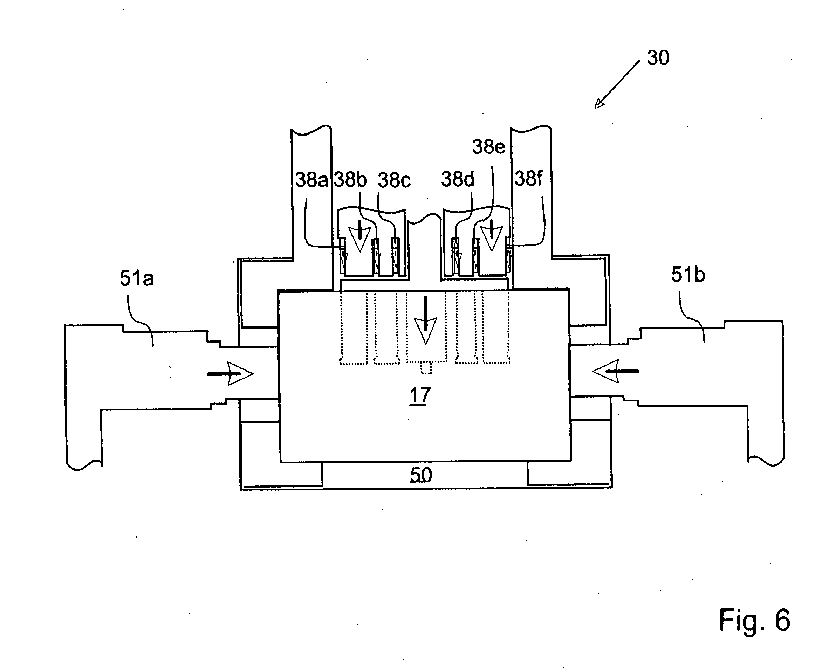

Figur 6 zeigt die Montagevorrichtung aus Figur 5 mit einem in der Montagevorrichtung angeordneten Grundkörper 17 eines Grundblocks eines Pneumatikverteilers eines TC-Pneumatikventils . Die Gleitschienen der Montagevorrichtung sind in der Darstellung bereits in den Grundkörper eingefahren. Ferner ist hier vor jedem Schiebstift eine Dichtung angeordnet, die in den Grundkörper eingeführt und hier an einer vorgesehenen Position montiert werden soll. Die in dem Grundkörper des TC-Pneumatikventils vorgesehene Aussparung verläuft auf der den Gleitschienen zugewandten Längsseite des Ventils und ist in der in Figur 6 gezeigten Darstellung somit nicht zu erkennen.

Zur Montage der Dichtungen werden hier zunächst die Gleitschienen 31a bis 31d nach vorne in den Grundkörper 17 verfahren und anschließend die Dichtungen unter Verformung längs der Gleitbahnen in den Grundkörper 17 eingeschoben. Zweckmäßig sind in den Seitenwänden oder Zwischenwänden des Grundkörpers, an die sich die Dichtungen anlegen sollen, jeweils kleine Positionsnuten entsprechend dem gewünschten Konturverlauf der jeweiligen Dichtung eingebracht. Die Nuten sind hierbei so ausgeführt, dass sie die Dichtungen teilweise, jedoch nicht vollständig aufnehmen. Eine mittels der Montagevorrichtung in den Grundkörper 17 eingeschobene Dichtung gleitet somit ohne weiteres Zutun aufgrund der Rückverformungstendenz in eine solche Nut. Sind die Dichtungen an den jeweiligen Positionen in dem Grundkörper angekommen, so kommt es somit auch zu einer zumindest teilweisen Rückverformung der jeweiligen Dichtung. Die Montagevorrichtung kann sodann wieder aus dem Grundkörper herausgezogen werden, wobei darauf zu achten ist, dass die eingebrachten Dichtungen nicht versehentlich mit der Montagevorrichtung wieder herausgezogen werden. Insbesondere in den Fällen, in denen keine Nut an der jeweiligen Seitenwand angebracht ist, kann es von Vorteil sein, die Montagevorrichtung zunächst in axialer Richtung von der eingebrachten Dichtung zu entfernen bevor die Montagevorrichtung in radialer Richtung aus dem Grundkörper herausgezogen wird. Anschließend können die Käfige in die Zwischenräume eingesetzt werden.

Die Anordnung der Grundblöcke in der Montagevorrichtung, wie in Figur 6 dargestellt, sowie das Entnehmen der fertig montierten Grundblöcke erfolgt vorzugsweise vollautomatisch mittels Greifvorrichtungen.

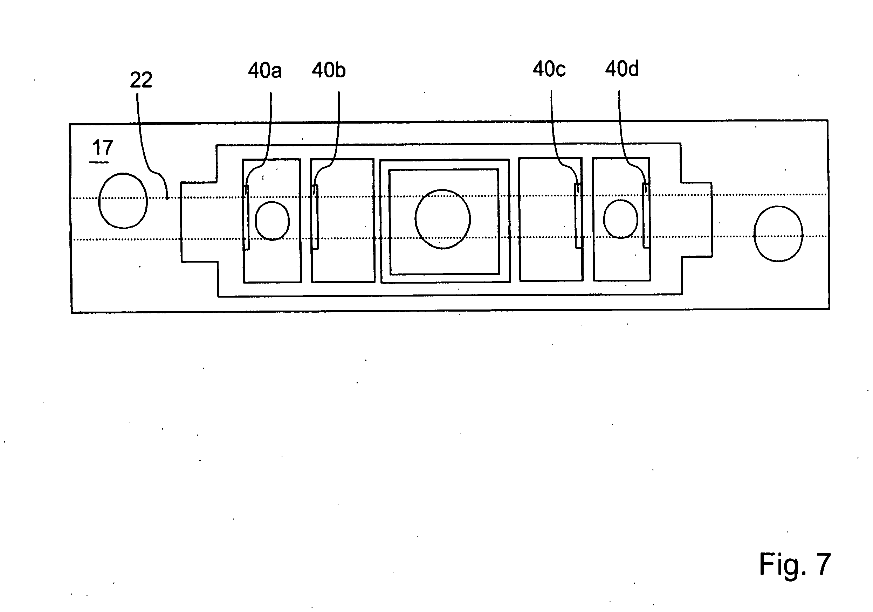

Figur 7 zeigt einen Grundkörper 17 eines Grundblocks eines TC-Pneumatikventils, in den mittels der erfindungsgemäßen Montagevorrichtung vier Dichtungen 40a bis 40d eingebracht wurden. Die eingebrachten Dichtungen 40a bis 40d liegen jeweils an den Zwischenwänden oder den Seitenwänden des Grundkörpers 17 an und umrahmen hier jeweils die Durchgangsbohrungen. Die Position des Kanals 22, in den später der Ventilkolben eingesetzt wird, ist in Figur 7 gestrichelt eingezeichnet. In einem nächsten Montageschritt wird in jeden Zwischenbereich ein Käfig eingesetzt.

## Patentansprüche

1. Montagevorrichtung (30) zum bezüglich einer Kanalachse eines Kanals (21) radialen Einführen eines flexiblen Zwischenelements in einen Zwischenraum eines Bauteils, insbesondere zum radialen Einführen einer flexiblen Dichtung (40) in einen Zwischenraum eines Pneumatikverteilers (10), mit einer Gleitschiene (31), die mit einem vorderen Teil (31a) durch eine in dem Bauteil vorgesehene Öffnung bis in den Bereich des Zwischenraums des Bauteils einsetzbar ist, wobei die Gleitschiene (31) eine Gleitbahn (32) umfasst, längs derer das flexible Zwischenelement bei in das Bauteil eingesetzter Gleitschiene unter Nutzung der Flexibilität des Zwischenelements in radialer Richtung gleitend in den Zwischenraum des Bauteils einführbar ist, **dadurch gekennzeichnet, dass** die Montagevorrichtung ferner einen Grundblock (36) mit einer Durchgangsöffnung umfasst und die Gleitschiene mit einem hinteren, dem vorderen Teil abgewandten Teil (31b) der Gleitschiene (31) durch die Durchgangsöffnung hindurchgreifend so angeordnet und mit dem Grundblock (36) verbunden ist, dass zwischen Gleitschiene und Grundblock ein Zwischenspalt verbleibt, durch den das flexible Zwischenelement durch den Grundblock gleiten kann.

2. Montagevorrichtung nach Anspruch 1,
wobei die Gleitschiene (31) in ihrem vorderen Teil (31a) zungenförmig ausgebildet ist.

3. Montagevorrichtung nach einem der vorhergehenden Ansprüche,
wobei die Gleitbahn (32) als Vertiefung in der Gleitschiene ausgebildet ist und zur seitlichen Begrenzung der Gleitbahn ein erster seitlicher Begrenzungssteg (33) sowie ein dem ersten seitlichen Begrenzungssteg gegenüberliegender zweiter seitlicher Begrenzungssteg (34) an der Gleitschiene angeordnet sind.

4. Montagevorrichtung nach Anspruch 3,
wobei zusätzlich ein dritter, vorderer Begrenzungssteg (35) an der Gleitschiene angeordnet ist, um den Gleitweg des flexiblen Zwischenelements in Einführrichtung zu begrenzen.

5. Montagevorrichtung nach einem der vorhergehenden Ansprüche,
wobei die Gleitbahn auf einer ersten Seite der Gleitschiene angeordnet ist und ferner auf einer zweiten, der ersten Seite entgegengesetzten Seite der Gleitschiene eine zweite Gleitbahn angeordnet ist.

6. Montagevorrichtung nach Anspruch 1,
wobei an dem Grundblock zumindest ein Zentrierelement (37a, 37b) zur Zentrierung des Grundblocks an dem Bauteil angeordnet ist.

7. Montagevorrichtung nach einem der vorhergehenden Ansprüche,
wobei die Montagevorrichtung ferner einen Schiebestift (38) umfasst, der längs der Gleitbahn (32) führbar ist, um das flexible Zwischenelement in den Zwischenraum des Bauteils einzuschieben.

8. Montagevorrichtung nach einem der vorhergehenden Ansprüche,
wobei das flexible Zwischenelement eine Dichtung (40) mit vorzugsweise rundem oder ovalem Querschnitt, besonders bevorzugt eine Rundschnurdichtung ist.

9. Montagevorrichtung nach einem der vorhergehenden Ansprüche,
wobei die Montagevorrichtung eine Mehrzahl von Gleitschienen zum gleichzeitigen Einsetzen von mehreren flexiblen Zwischenelementen in Zwischenräume eines Bauteils umfasst.

10. Montagevorrichtung nach einem der vorhergehenden Ansprüche,
wobei die Montagevorrichtung eine vollautomatische Steuerung zur vollautomatischen Montage von Dichtungen in Zwischenräume von Pneumatikverteilern umfasst.

11. Verfahren zur Montage eines flexiblen Zwischenelements in einen Zwischenraum eines Bauteil, insbesondere zur Montage einer flexiblen Dichtung in einen oder mehrere Zwischenräume eines Pneumatikverteilers,
wobei in einem ersten Schritt die Gleitschiene der Montagevorrichtung gemäß einem der Ansprüche 1 bis 10 mit ihrem vorderen Teil durch eine in dem Bauteil vorgesehene Öffnung bis in den Bereich des Zwischenraums des Bauteils eingesetzt wird,
und anschließend das Zwischenelement unter Nutzung der Flexibilität des Zwischenelements längs der Gleitschiene gleitend radial in den Zwischenraum eingeführt wird, um sich hier zumindest teilweise in ihren Ausgangszustand zurückzuverformen.

12. Verfahren nach Anspruch 11,
wobei nach dem Einführen des Zwischenelements in den Zwischenraum die Montagevorrichtung aus der Öffnung des Bauteils entfernt wird und die Öffnung in dem Bauteil mittels eines Käfigs verschlossen wird.

## Claims

1. Mounting device (30) for the introduction, radial with respect to a duct axis of a duct (21), of a flexible intermediate element into an interspace of a component, in particular for the radial introduction of a flexible seal (40) into an interspace of a pneumatic distributor (10), with a sliding rail (31) which can be inserted with a front part (31a) through an opening provided in the component into the region of the interspace of the component, wherein the sliding rail (31) comprises a slideway (32) along which the flexible intermediate element can be introduced in a sliding manner into the interspace of the component in the radial direction, with the flexibility of the intermediate element being utilized, when the sliding rail has been inserted into the component **characterized in that,** furthermore, the mounting device comprises a basic block (36) with a through-orifice, and the sliding rail is arranged, engaging with a rear part (31b), facing away from the front part, of the sliding rail (31) through the through-orifice, and is connected to the basic block (36), such that, between the sliding rail and basic block, an intermediate gap remains, through which the flexible intermediate element can slide through the basic block.

2. Mounting device according to Claim 1, the sliding rail (31) being of tongue-shaped design in its front part (31a).

3. Mounting device according to one of the preceding claims, the slideway (32) being designed as a depression in the sliding rail, and, for the lateral delimitation of the slideway, a first lateral boundary web (33) and a second lateral boundary web (34), lying opposite the first lateral boundary web, being arranged on the sliding rail.

4. Mounting device according to Claim 3, additionally a third, front boundary web (35) being arranged on the sliding rail, in order to limit the sliding travel of the flexible intermediate element in the introduction direction.

5. Mounting device according to one of the preceding claims, the slideway being arranged on a first side of the sliding rail, and, furthermore, a second slideway being arranged on a second side, opposite the first side, of the sliding rail.

6. Mounting device according to Claim 1, at least one centring element (37a, 37b) for centring the basic block on the component being arranged on the basic block.

7. Mounting device according to one of the preceding claims, the mounting device comprising, furthermore, a push pin (38) which can be guided along the slideway (32) in order to push the flexible intermediate element into the interspace of the component.

8. Mounting device according to one of the preceding claims, the flexible intermediate element being a seal (40) having a preferably round or oval cross section, particularly preferably a toroidal sealing ring.

9. Mounting device according to one of the preceding claims, the mounting device comprising a plurality of sliding rails for the simultaneous insertion of a plurality of flexible intermediate elements into interspaces of a component.

10. Mounting device according to one of the preceding claims, the mounting device comprising a fully automatic control for the fully automatic mounting of seals into interspaces of pneumatic distributors.

11. Method for mounting a flexible intermediate element into an interspace of a component, in particular for mounting a flexible seal into one or more interspaces of a pneumatic distributor, in a first step the sliding rail of the mounting device according to one of Claims 1 to 10 being inserted with its front part through an orifice, provided in the component, into the region of the interspace of the component, and subsequently the intermediate element being introduced along the sliding rail in a sliding manner into the interspace radially, with the flexibility of the intermediate element being utilized, in order to be reformed at least partially into its initial state in the said interspace.

12. Method according to Claim 11, the mounting device being removed from the orifice of the component, and the orifice in the component being closed by means of a cage after the introduction of the intermediate element into the interspace.

## Revendications

1. Dispositif de montage (30) pour introduire un élément intermédiaire souple par rapport à l'axe d'un canal (21) dans un volume intermédiaire d'une pièce, notamment pour introduire radialement un joint souple (40) dans le volume intermédiaire d'un distributeur pneumatique (10), comprenant un rail de glissement (31) qui se place avec sa partie avant (31a) à travers une ouverture de la pièce jusque dans la zone du volume intermédiaire de la pièce,
le rail de glissement (31) entoure un chemin de glissement (32) le long duquel on introduit l'élément intermédiaire souple lorsque ce rail de glissement est placé dans la pièce en utilisant la souplesse de l'élément intermédiaire dans la direction radiale, en glissant dans le volume intermédiaire de la pièce,
**caractérisé en ce que**
le dispositif de montage comporte en outre un bloc de base (36) muni d'un orifice traversant et le rail de glissement est installé à travers l'orifice de passage avec une partie arrière (31b) du rail de glissement (31), à l'opposé de sa partie avant, le rail de glissement étant relié au bloc de base (36) de façon à laisser subsister un intervalle entre le rail de glissement et le bloc de base, intervalle à travers lequel l'élément intermédiaire souple peut glisser à travers le bloc de base.

2. Dispositif de montage selon la revendication 1,
dans lequel
le rail de glissement (31) a une partie avant (31a) en forme de languette.

3. Dispositif de montage selon l'une des revendications précédentes,
dans lequel
le chemin de glissement (32) est réalisé sous la forme d'une cavité dans le rail de glissement et la limitation latérale du chemin de glissement est réalisée par une première nervure de délimitation latérale (33) ainsi qu'une seconde nervure latérale de délimitation (34) en regard de la première nervure latérale de délimitation sur le rail de glissement.

4. Dispositif de montage selon la revendication 3,
dans lequel
il est prévu en outre une troisième nervure de délimitation avant (35) sur le rail de glissement pour limiter le chemin de glissement de l'élément intermédiaire souple dans la direction d'introduction.

5. Dispositif de montage selon l'une des revendications précédentes,
dans lequel
le chemin de glissement est prévu sur un premier côté du rail de glissement et en outre un second chemin de glissement est prévu sur le second côté du rail de glissement à l'opposé du premier.

6. Dispositif de montage selon la revendication 1,
dans lequel
le bloc de base comporte au moins un élément de centrage (37a, 37b) pour centrer le bloc de base sur la pièce.

7. Dispositif de montage selon l'une des revendications précédentes,
dans lequel
le dispositif de montage comporte en outre une tige coulissante (38) guidée le long du chemin de glissement (32) pour introduire l'élément intermédiaire souple dans l'espace intermédiaire de la pièce.

8. Dispositif de montage selon l'un des revendications précédentes,
dans lequel
l'élément intermédiaire souple est un joint (40) ayant de préférence une section ronde ou ovale et notamment un joint rond en forme de cordon.

9. Dispositif de montage selon l'un des revendications précédentes,
dans lequel
le dispositif de montage comporte plusieurs rails de glissement pour placer simultanément plusieurs éléments intermédiaires souples dans les espaces intermédiaires d'une pièce.

10. Dispositif de montage selon l'un des revendications précédentes,
dans lequel
le dispositif de montage comporte une commande totalement automatique pour le montage totalement automatique de joints dans les volumes intermédiaires du distributeur pneumatique.

11. Procédé de montage d'un élément intermédiaire souple dans un volume intermédiaire d'une pièce notamment pour le montage d'un joint souple dans un ou plusieurs volumes intermédiaires d'un distributeur pneumatique,
selon lequel
dans une première étape on place le rail de glissement du dispositif de montage selon l'une des revendications 1 à 10 avec sa partie avant à travers une ouverture prévue dans la pièce jusque dans la zone du volume intermédiaire de la pièce et ensuite on introduit l'élément intermédiaire en utilisant la souplesse de l'élément intermédiaire en glissant le long du rail de glissement, radialement dans le volume intermédiaire pour reprendre au moins partiellement sa forme initiale.

12. Procédé selon la revendication 11,
selon lequel
après introduction de l'élément intermédiaire dans le volume intermédiaire on enlève le dispositif de montage de l'ouverture de la pièce et on la ferme à l'aide d'une cage.
